# FASCICULE DE BREVET EUROPEEN

(11) **EP 1 741 850 B1**
(45) Date de publication et mention de la délivrance du brevet: **08.09.2010**
(21) Numéro de dépôt: 06116905.8
(22) Date de dépôt: 10.07.2006
(51) Int. Cl.: E04B 9/20, F16B 37/04, E04B 1/58, F16B 7/04, E04B 9/10, E04B 9/14

(54) **Elément de raccordement de fourrures pour doublage de paroi**
Vorrichtung zur Verbindung von Stabwerkskomponenten einer Wandverkleidung
Device for joining furring elements of a wall cladding

(30) Priorité: 08.07.2005 FR 0552116
(43) Date de publication de la demande: 10.01.2007
(73) Titulaire: SAINT-GOBAIN ISOVER, 92400 Courbevoie (FR)
(72) Inventeur: Joret, Laurent, 92370, Chaville (FR); Bourdon, Eric, 78290, CROISSY SUR SEINE (FR)
(74) Mandataire: Cardin, Elise

(56) Documents cités:
- EP-A- 0 651 108
- EP-A- 0 718 451
- EP-A- 0 727 546
- DE-U1- 9 016 608
- FR-A- 2 539 442
- FR-A- 2 578 570
- FR-A- 2 785 312
- FR-A- 2 807 775
- FR-A- 2 822 179
- FR-A- 2 852 989
- FR-A- 2 856 444

## Description

La présente invention a trait au doublage de parois, à l'intérieur de bâtiment, visant à procurer une isolation thermique, acoustique, ainsi qu'un aspect uniforme, lisse. Les parois sont de hauteurs comprises entre 2,40 et 6 m, et peuvent être constituées d'un mur en béton, parpaings, briques, pierres mais aussi d'une paroi de maison à ossature bois.

La paroi est verticale, horizontale ou inclinée, par exemple pour un rampant sous un toit. Le doublage épouse évidemment cette forme plus ou moins complexe, tout en contournant les ouvertures, fenêtres.

On connaît en particulier des documents EP 718 451 A1 et EP 727 546 A1, des systèmes composés de tiges filetées fixées à la paroi à isoler, de matelas de laine minérale que l'on embroche sur ou intercale entre les tiges filetées, puis maintient contre la paroi par des profilés métalliques solidarisés aux tiges filetées par l'intermédiaire de platines taraudées.

Ces platines comportent par exemple deux mâchoires diamétralement opposées leur permettant de venir en engagement avec les ailes de retour d'un profilé en U tous les demi-tours de rotation.

Ce système permet un réglage fin de la distance du profilé déjà en place à la paroi.

Les documents FR 2 822 179 et FR 2 852 989 en décrivent des perfectionnements dans lesquels un cavalier de maintien et blocage du profilé en U est monté à rotation, ou vissé à la platine taraudée.

Les documents FR 2 539 442 et EP 651 108 décrivent des éléments de raccordement ne comprenant pas au moins deux parties d'engagement distinctes et positionnées l'une à côté de l'autre directement sur le plan d'une plaque de base.

Les profilés peuvent être dits en C, I, L, U, W, Z selon leur forme et sont également appelés fourrures. S'ils sont de nature métallique, ils sont conformes au projet de norme pr-EN 14 195. Ils sont insérés en pied et en tête dans des cornières ou des profilés en U, appelés aussi lisses, fixés au sol et au plafond. Enfin, le doublage de paroi est complété par un parement de plaques de plâtre mises en appui contre les fourrures et les lisses et vissées à ces fourrures.

Les fourrures sont traditionnellement disposées verticalement, même si on peut trouver, très rarement (voir par exemple l'Avis Technique 9/03-759 du Centre Scientifique et Technique du Bâtiment) des fourrures disposées horizontalement, notamment au nombre de deux pour les hauteurs de parois précitées. Montées en position verticale, les fourrures sont habituellement fixées à la paroi tous les 1,30 m à 1,50 m - toujours pour les hauteurs de parois précitées, et pour un parement de plaques de plâtre courantes.

Une mise en oeuvre en plafond est également incluse dans le cadre de l'invention ; dans ce cas les lisses sont fixées sur des murs verticaux porteurs, et les fourrures y sont insérées en position horizontale.

Le problème dont traite l'invention est le raccordement de fourrures, soit leur mise bout à bout en longueurs supérieures à celles disponibles sur le marché, soit leur mise en parallèle (doublement de la largeur d'appui du parement), soit leur raccordement avec un angle pour s'adapter à des formes complexes telles que tour de fenêtre, jonction pied droit - rampant.

A cet effet, l'invention a pour objet un élément de raccordement de deux fourrures de sections présentant chacune deux extrémités parallèles en vis-à-vis et d'écartement initial constant mais le cas échéant variable par déformation élastique, élément de raccordement comprenant une plaque de base et au moins deux parties d'engagement, la section de ces parties d'engagement comportant une rainure apte à recevoir les extrémités parallèles de la fourrure et une portion opposée à ladite plaque de base de dimension adaptée pour être contenue à l'arrière desdites extrémités, de telle manière que puissent être raccordées deux fourrures qui sont soit aboutées, soit disposées côte à côte et parallèles, soit disposées pour former un angle, chacun desdits raccordements étant possible.

Ainsi des fourrures sont-elles susceptibles d'être associées avec la possibilité de régler leur écartement dans une certaine mesure. Le raccordement de fourrures peut être obtenu par mise des deux extrémités parallèles de la section de la fourrure en coïncidence avec ladite rainure de la partie d'engagement, et coulissement des unes dans l'autre. Le coulissement est facilité par la surface de contact limitée sur les faces intérieures de la fourrure.

De préférence, l'élément de raccordement comprend au moins deux parties d'engagement entre lesdites deux extrémités parallèles de deux fourrures, la section de ces parties d'engagement s'élargissant à profondeur d'engagement croissante jusqu'à entrée en contact de chaque partie d'engagement avec deux extrémités parallèles d'une fourrure, puis écartement de celles-ci par déformation élastique, la zone de section maximale de chaque partie d'engagement se prolongeant par un rétrécissement formant rainure apte à recevoir et maintenir les deux extrémités parallèles reprenant leur écartement initial.

Le raccordement de fourrures courantes en U, avec un fond sensiblement plat et deux ailes de retour constituant lesdites deux extrémités parallèles, devient particulièrement aisé ; il est obtenu par simple pression manuelle sur la fourrure qui s'encliquète.

Les fourrures peuvent être raccordées en formant des angles divers.

L'élément de raccordement de l'invention est de préférence essentiellement constitué d'une matière plastique injectable, ou d'un composite de celle-ci. Peuvent être cités les polyoléfines (polyéthylène, polypropylène ...), les poly (chlorures de vinyle), les polyamides, les styréniques, leurs copolymères, seuls ou en mélanges de plusieurs d'entre eux, et éventuellement associés à d'autres matériaux - notamment en vue de leur renforcement mécanique - tels que fibres de verre ou autre.

Dans une réalisation particulière, l'élément de raccordement présente, entre deux au moins de ses parties d'engagement, une portion déformable ou formant articulation, telle qu'un coudage ou une ligne de moindre épaisseur permettant de plier l'élément de raccordement d'un angle souhaité. Des fourrures maintenues par des parties d'engagement situées de part et d'autre de ce coudage, de cet angle, supportent des plaques de parement formant entre elles le même angle. Cette fonctionnalité de l'élément de raccordement est intéressante pour le doublage de paroi dans un angle de celle-ci : angle droit ou non, convexe ou concave d'une pièce, jonction pied droit - rampant ... La portion déformable peut aussi être obtenue par l'utilisation d'une matière déformable ou élastique (susceptible d'être obtenue par injection bi-matière) ou en disposant une ligne d'orifices de taille, forme et espacement adaptés.

De préférence, l'une au moins des parties d'engagement de l'élément de raccordement a une forme telle que, lorsqu'elle maintient une fourrure, celle-ci est susceptible de rotation ou d'orientation par rapport à elle selon un axe perpendiculaire au plan défini par lesdites deux extrémités parallèles. Il convient à cet effet que la surface de la partie d'engagement en contact avec la fourrure soit une surface de révolution ou des fractions d'une telle surface de révolution ou un polygone inscrit.

Ainsi peut-on commodément ajuster la position angulaire de la fourrure :
des angles divers peuvent en effet être recherchés dans certains doublages de tours de fenêtres par exemple.

Avantageusement, l'élément de raccordement de l'invention comporte un moyen de liaison avec blocage à un élément d'entretoisement. Celui-ci étant fixé à la paroi à doubler, il peut être recherché en particulier que la liaison avec blocage de l'élément de raccordement s'effectue à distance réglable et contrôlée de la paroi. Ainsi atteint-on la possibilité de régler la distance de la fourrure et du parement à la paroi, ce qui peut être important notamment lorsque celle-ci est irrégulière.

Dans une variante préférée, l'élément d'entretoisement comprend une tige filetée dont le filetage est chanfreiné en au moins une fraction angulaire, et le moyen de liaison comprend un taraudage correspondant au filetage de la tige et alésé en au moins une fraction angulaire correspondant à la ou aux fractions angulaires non chanfreinées du filetage de sorte que les deux éléments soient de libre translation relative selon l'axe de la tige quand la ou les fractions angulaires filetées de la tige est (sont) mise(s) en regard de la ou des fractions angulaires alésées du taraudage, et la ou les fractions angulaires chanfreinées du filetage en regard de la ou des fractions angulaires de taraudage.

Les termes « chanfreiné », « alésé » peuvent ne pas faire référence à la mise en forme par usinage de pièces métalliques. Ils désignent plutôt ici une forme chanfreinée, respectivement une forme présentant un évidement, obtenues notamment par injection/moulage d'un thermoplastique.

L'invention a également pour objet un doublage de paroi verticale, horizontale ou inclinée comprenant :
- des éléments d'entretoisement fixés sur la paroi ou sur les chevrons dans le cas d'une paroi inclinée,
- un isolant thermique et/ou acoustique embroché sur ou intercalé entre les éléments d'entretoisement,
- des éléments de maintien de fourrures pour l'appui d'un parement, fixés aux éléments d'entretoisement à distance voulue de la paroi,
- des fourrures dont au moins certaines sont fixées auxdits éléments de maintien, et
- un parement en appui sur les fourrures, le doublage de paroi comprenant un élément de raccordement d'au moins deux fourrures tel que décrit précédemment.

De préférence, ledit élément de raccordement a une partie formant élément de maintien desdites fourrures.

Dans un mode de réalisation préféré, l'isolant thermique et/ou acoustique est un matelas de laine minérale de masse volumique comprise entre 10 et 100 kg/m³, notamment de laine de verre ou de roche.

D'autres objets de l'invention sont :
- un procédé d'aboutement de deux fourrures selon une direction unique, avec écartement éventuel d'une distance réglable, au moyen d'un élément de raccordement comme décrit ci-dessus ;
- un procédé de raccordement de deux fourrures en position coplanaire de leurs extrémités parallèles au moyen d'un élément de raccordement comme décrit ci-dessus ; des exemples pouvant en être donnés sont le raccordement de deux fourrures côte à côte et parallèles, ou deux fourrures en tour de fenêtre formant un angle droit ou non ;
- un procédé de raccordement de deux fourrures en position non coplanaire de leurs extrémités parallèles, au moyen d'un élément de raccordement comme décrit ci-dessus ; ceci est notamment obtenu par la variante dans laquelle deux au moins des parties d'engagement de l'élément de raccordement sont reliées par l'intermédiaire d'un coudage ou d'une ligne de moindre épaisseur permettant de plier l'élément de raccordement d'un angle souhaité.

L'invention est illustrée par les figures annexées dans lesquelles
- la figure 1 représente schématiquement un élément de raccordement conforme à l'invention vu de face, ainsi que deux fourrures à raccorder en perspective ;
- la figure 2 est une vue de dessus de cet élément de raccordement ;
- la figure 3 est une vue de face d'un autre élément de raccordement conforme à l'invention et d'une partie d'un élément d'entretoisement auquel il est destiné à être fixé ;
- la figure 4 est une vue partielle en perspective de l'élément de raccordement et de l'élément d'entretoisement de la figure 3 en position de présentation mutuelle.

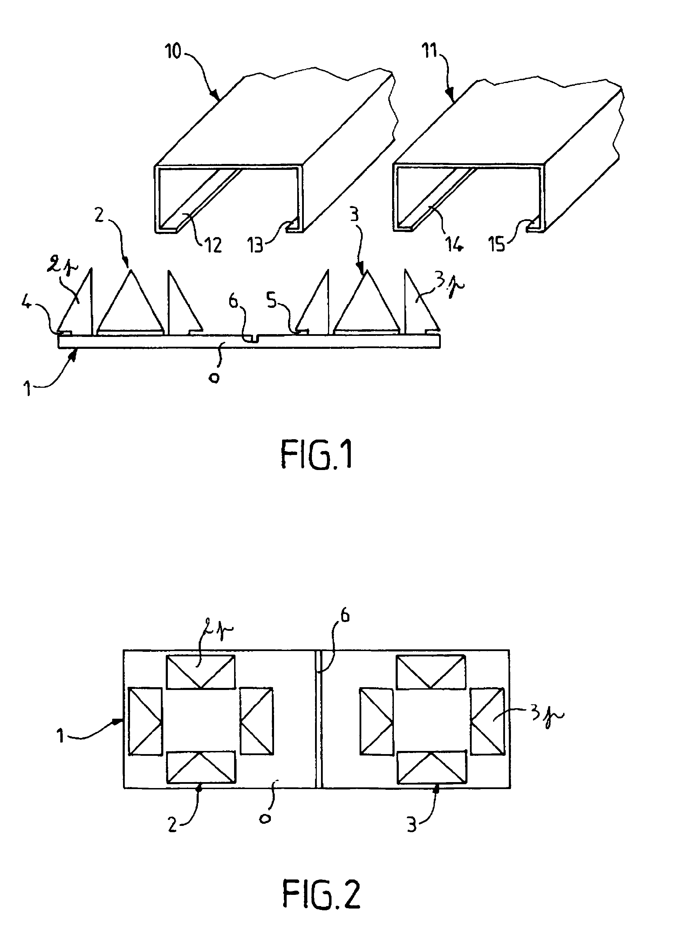

En référence aux figures 1 et 2, l'élément de raccordement 1 comprend deux parties d'engagement 2, 3 identiques reliées par une plaque support 0 essentiellement rigide, à l'exception de la ligne de moindre épaisseur 6 le long de laquelle il est possible de plier la plaque support 0 jusqu'à un angle maximal de 360°.

L'élément de raccordement 1 est en polyamide renforcé par des fibres de verre.

Chaque partie d'engagement 2, 3 est constituée de quatre fractions de pyramide disposées symétriquement autour d'un axe. La base de chacune de ces fractions est reliée à la plaque support 0 par un rétrécissement 4, 5 de fond rectiligne. Deux fonds de rétrécissement 4 ou 5 appartenant à des fractions de pyramides en vis-à-vis sont distants de l'écartement des bords libres des ailes de retour 12, 13 ou 14, 15.

Les fourrures 10, 11 sont des profilés métalliques en U à fond plat et présentant deux ailes de retour 12, 13, respectivement 14, 15 constituant deux extrémités parallèles de leur section. Les fourrures 10, 11 peuvent être alternativement constituées de matière plastique renforcée, par exemple du même matériau que l'élément de raccordement 1.

Etant donné la forme des parties d'engagement 2, 3, une fourrure 10, 11 est approchée d'une partie d'engagement 2, 3 selon l'une des deux directions possibles perpendiculaires entre elles.

Il y a contact des deux ailes de retour 12, 13 ou 14, 15 avec deux fractions de pyramide en vis-à-vis, puis écartement de ces deux ailes de retour 12, 13 ou 14, 15 par déformation élastique. Ces dernières atteignant les rétrécissements 4 ou 5, reprennent leur configuration (écartement) de départ.

Dans une autre géométrie avantageuse non représentée des parties d'engagement 2, 3, les fractions de pyramide sont remplacées par des fractions de cône. Le fond du rétrécissement 4 ou 5 des quatre fractions de cône constituant le moyen d'engagement 2 ou 3 décrit un cercle de diamètre égal à l'écartement des bords libres des ailes de retour 12, 13 ou 14, 15.

Ainsi les fourrures 10, 11 peuvent-elles être présentées à leur partie d'engagement 2, 3 dans une position angulaire quelconque et non plus dans une position choisie parmi deux positions perpendiculaires. Une fois les ailes de retour 12, 13 ou 14, 15 engagées dans le rétrécissement 4 ou 5, la fourrure 10 ou 11 est susceptible de rotation par rapport à la partie d'engagement 2 ou 3, selon l'axe de symétrie de celui-ci.

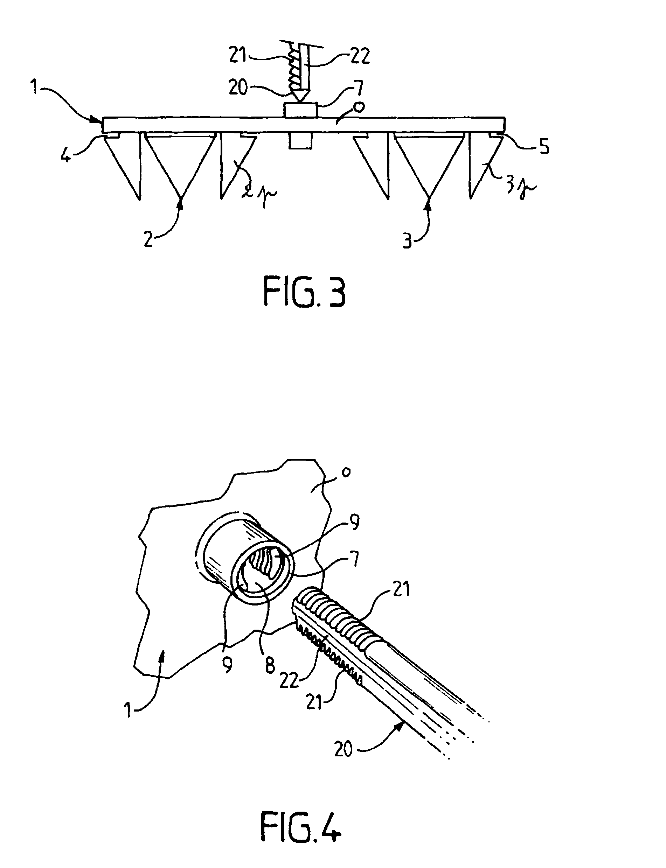

L'élément de raccordement 1 représenté aux figures 3 et 4 comporte un moyen 7 de liaison avec blocage à un élément d'entretoisement 20. Celui-ci est fixé à une paroi à doubler non représentée. L'élément d'entretoisement 20 comprend une tige filetée dont le filetage est chanfreiné en au moins une fraction angulaire 22, et le moyen 7 de liaison comprend un taraudage correspondant au filetage de la tige et alésé en au moins une fraction angulaire 8 correspondant à la ou aux fractions angulaires 21 non chanfreinées du filetage. Dans la position de présentation de l'élément de raccordement 1 à l'élément d'entretoisement 20 représentée à la figure 4, les fractions angulaires filetées 21 de la tige sont mises en regard des fractions angulaires alésées 8 du taraudage, et les fractions angulaires chanfreinées 22 du filetage en regard des fractions angulaires de taraudage 9, de sorte qu'en position introduite de l'élément d'entretoisement 20 dans le moyen 7 de liaison, l'élément de raccordement 1 soit de libre translation par rapport à l'élément d'entretoisement 20, selon l'axe de celui-ci. Ainsi peut-on régler la distance de l'élément de raccordement 1 à la paroi à doubler.

Une fois cette distance correctement réglée, une rotation de l'élément de raccordement 1 par rapport à l'élément d'entretoisement 20 met au moins partiellement en emboîtement les unes dans les autres les fractions angulaires de taraudage 9 et les fractions angulaires filetées 21. La liberté en translation relative des deux éléments 1, 20 est alors bloquée.

## Revendications

1. Elément de raccordement (1) de deux fourrures (10, 11) chacune de section présentant deux extrémités parallèles (12, 13; 14, 15) en vis-à-vis et d'écartement initial constant mais le cas échéant variable par déformation élastique **caractérisé en ce que** l'elément de raccordement (1) comprend une plaque de base (0) et au moins deux parties d'engagement (2, 3), la section de ces parties d'engagement (2, 3) comportant une rainure (4, 5) apte à recevoir les extrémités parallèles (12, 13 ; 14, 15) de chaque fourrure (10, 11) et une portion (2 p, 3 p) opposée à ladite plaque de base (0) de dimension adaptée pour être contenue à l'arrière desdites extrémités (12, 13 ; 14, 15), de telle manière que puissent être raccordées deux fourrures (10, 11) qui sont soit aboutées, soit disposées côte à côte et parallèles, soit disposées pour former un angle, chacun desdits raccordements étant possible.

2. Elément de raccordement (1) selon la revendication 1, la section desdites parties d'engagement (2, 3) s'élargissant à profondeur d'engagement croissante jusqu'à entrée en contact de chaque partie d'engagement (2, 3) avec les deux extrémités parallèles (12, 13 ; 14, 15) d'une fourrure (10, 11), puis écartement de celles-ci par déformation élastique, la zone de section maximale de chaque partie d'engagement (2, 3) se prolongeant par un rétrécissement (4, 5) formant rainure apte à recevoir et maintenir les deux extrémités parallèles (12, 13 ; 14, 15) reprenant leur écartement initial.

3. Elément de raccordement (1) selon l'une des revendications précédentes, essentiellement constitué d'une matière plastique injectable, ou d'un composite de celle-ci.

4. Elément de raccordement (1) selon l'une des revendications précédentes, présentant, entre deux au moins de ses parties d'engagement (2, 3) une portion déformable ou formant articulation (6).

5. Elément de raccordement (1) selon l'une des revendications précédentes, **caractérisé en ce que** l'une au moins de ses parties d'engagement (2, 3) a une forme telle que, lorsqu'elle maintient une fourrure (10, 11), celle-ci est susceptible de rotation par rapport à elle selon un axe perpendiculaire au plan défini par lesdites deux extrémités parallèles (12, 13 ; 14, 15).

6. Elément de raccordement (1) selon l'une des revendications précédentes, **caractérisé en ce qu'**il comporte un moyen (7) de liaison avec blocage à un élément d'entretoisement (20).

7. Elément de raccordement (1) selon la revendication 6, **caractérisé en ce que** l'élément d'entretoisement (20) comprend une tige filetée dont le filetage est chanfreiné en au moins une fraction angulaire (22), et le moyen (7) de liaison comprend un taraudage correspondant au filetage de la tige et alésé en au moins une fraction angulaire (8) correspondant à la ou aux fractions angulaires (21) non chanfreinées du filetage de sorte que les deux éléments (20, 1) soient de libre translation relative selon l'axe de la tige quand la ou les fractions angulaires filetées (21) de la tige est (sont) mise(s) en regard de la ou des fractions angulaires alésées (8) du taraudage, et la ou les fractions angulaires chanfreinées (22) du filetage en regard de la ou des fractions angulaires de taraudage (9).

8. Doublage de paroi verticale, horizontale ou inclinée comprenant
- des éléments d'entretoisement (20) fixés sur la paroi ou sur les chevrons dans le cas d'une paroi inclinée,
- un isolant thermique et/ou acoustique embroché sur ou intercalé entre les éléments d'entretoisement (20),
- des éléments de maintien de fourrures (10, 11) pour l'appui d'un parement, fixés aux éléments d'entretoisement (20) à distance voulue de la paroi,
- des fourrures (10, 11) dont au moins certaines sont fixées auxdits éléments de maintien, et
- un parement en appui sur les fourrures (10, 11),
**caractérisé en ce qu'**il comprend un élément de raccordement (1) d'au moins deux fourrures (10, 11) selon l'une des revendications précédentes.

9. Doublage selon la revendication 8, **caractérisé en ce que** ledit élément de raccordement (1) a une partie formant élément de maintien desdites fourrures (10, 11).

10. Procédé d'aboutement de deux fourrures (10, 11) selon une direction unique, avec écartement éventuel d'une distance réglable, au moyen d'un élément de raccordement (1) selon l'une des revendications 1 à 7.

11. Procédé de raccordement de deux fourrures (10, 11) en position coplanaire de leurs extrémités parallèles (12, 13 ; 14, 15) au moyen d'un élément de raccordement (1) selon l'une des revendications 1 à 7.

12. Procédé de raccordement de deux fourrures (10, 11) en position non coplanaire de leurs extrémités parallèles (12, 13 ; 14, 15), au moyen d'un élément de raccordement (1) selon l'une des revendications 1 à 7.

## Claims

1. Element (1) for connecting two furring elements (10, 11) each with a section having two parallel ends (12, 13; 14, 15) facing one another and with an initial constant distance apart, but, as necessary, a variable distance apart by elastic deformation, **characterized in that** the connection element (1) comprises a baseplate (0) and at least two engagement portions (2, 3), the section of these engagement portions (2, 3) comprising a groove (4, 5) capable of receiving the parallel ends (12, 13; 14, 15) of each furring element (10, 11) and a portion (2p, 3p) opposite to the said baseplate (0) with a dimension suitable for being contained behind the said ends (12, 13; 14, 15), so that two furring elements (10, 11) can be connected which are either butt-jointed, or placed side-by-side and parallel, or placed to form an angle, each of the said connections being possible.

2. Connection element (1) according to Claim 1, the section of the said engagement portions (2, 3) becoming wider at increasing engagement depth until coming into contact with each engagement portion (2, 3) with the two parallel ends (12, 13; 14, 15) of a furring element (10, 11), then separation of the latter by elastic deformation, the zone of maximum section of each engagement portion (2, 3) being extended by a neck (4, 5) forming a groove capable of receiving and holding the two parallel ends (12, 13; 14, 15) resuming their initial distance apart.

3. Connection element (1) according to one of the preceding claims, essentially consisting of an injectable plastic or of a composite of the latter.

4. Connection element (1) according to one of the preceding claims, having, between at least two of its engagement portions (2, 3), a portion that is deformable or that forms an articulation (6).

5. Connection element (1) according to one of the preceding claims, **characterized in that** at least one of its engagement portions (2, 3) has a shape such that, when it holds a furring element (10, 11), the latter is capable of rotating relative to it on an axis perpendicular to the plane defined by the said two parallel ends (12, 13; 14, 15).

6. Connection element (1) according to one of the preceding claims, **characterized in that** it comprises a means (7) for linking, with locking, to a bracing element (20).

7. Connection element (1) according to Claim 6, **characterized in that** the bracing element (20) comprises a threaded rod, the thread of which is bevelled at at least one angular fraction (22), and the linking means (7) comprises a tapping matching the thread of the rod and is bored to at least one angular fraction (8) matching the unbevelled angular fraction or fractions (21) of the thread so that the two elements (20, 1) are free in relative translation on the axis of the rod when the threaded angular fraction or fractions (21) of the rod is(are) facing the bored angular fraction or fractions (8) of the tapping, and the bevelled angular fraction or fractions (22) of the thread facing the angular fraction or fractions of tapping (9).

8. Vertical, horizontal or inclined wall cladding comprising
- bracing elements (20) attached to the wall or to the chevrons in the case of an inclined wall,
- a thermal and/or acoustic insulator pinned onto or inserted between the bracing elements (20),
- elements for the retention of furring elements (10, 11) for resting a facing, said elements being attached to the bracing elements (20) at the desired distance from the wall,
- furring elements (10, 11) of which at least some are attached to the said retention elements, and
- a facing resting on the furring elements (10, 11),
**characterized in that** it comprises a connection element (1) for at least two furring elements (10, 11) according to one of the preceding claims.

9. Cladding according to Claim 8, **characterized in that** the said connection element (1) has a portion forming an element for the retention of the said furring elements (10, 11).

10. Method for butt-jointing two furring elements (10, 11) in a single direction, with optional spacing of an adjustable distance, by means of a connection element (1) according to one of Claims 1 to 7.

11. Connection method for two furring elements (10, 11) in coplanar position of their parallel ends (12, 13; 14, 15) by means of a connection element (1) according to one of Claims 1 to 7.

12. Connection method for two furring elements (10, 11) in non-coplanar position of their parallel ends (12, 13; 14, 15) by means of a connection element (1) according to one of Claims 1 to 7.

## Patentansprüche

1. Element zum Verbinden (1) von zwei Profilen (10, 11), die jeweils einen Querschnitt mit zwei einander gegenüber liegenden parallelen Enden (12, 13; 14, 15) aufweisen, die einen konstanten Ausgangsabstand haben, der jedoch gegebenenfalls durch elastische Verformung veränderlich ist, **dadurch gekennzeichnet, dass** das Verbindungselement (1) eine Basisplatte (0) sowie wenigstens zwei Eingriffsteile (2, 3) umfasst, wobei der Abschnitt dieser Eingriffsteile (2, 3) eine Nut (4, 5) aufweist, die geeignet ist, die parallelen Enden (12, 13; 14, 15) eines jeden Profils (10, 11) aufzunehmen, sowie ein von der Basisplatte (0) abgewandtes Teilstück (2p, 3p) mit geeigneter Abmessung, um hinter den Enden (12, 13; 14, 15) enthalten zu sein, derart, dass zwei Profile (10, 11) verbunden werden können, die entweder stumpf aneinander gefügt sind oder parallel nebeneinander angeordnet sind oder angeordnet sind, um einen Winkel zu bilden, wobei jede der genannten Verbindungen möglich ist.

2. Verbindungselement (1) nach Anspruch 1, wobei der Querschnitt der Eingriffsteile (2, 3) sich mit zunehmender Eingriffstiefe erweitert, bis jedes Eingriffsteil (2, 3) mit den beiden parallelen Enden (12, 13; 14, 15) eines Profils (10, 11) in Kontakt gelangt, dann diese durch elastische Verformung gespreizt werden, wobei der Bereich des maximalen Querschnitts jedes Eingriffsteils (2, 3) durch eine eine Nut bildende Verengung (4, 5) fortgesetzt ist, die geeignet ist, die beiden wieder ihren Ausgangsabstand einnehmenden parallelen Enden (12, 13; 14, 15) aufzunehmen und zu halten.

3. Verbindungselement (1) nach einem der vorstehenden Ansprüche, das im Wesentlichen aus einem spritzfähigen Kunststoff oder aus einem Verbundwerkstoff dessen besteht.

4. Verbindungselement (1) nach einem der vorstehenden Ansprüche, das zwischen wenigstens zwei seiner Eingriffsteile (2, 3) einen verformbaren oder ein Gelenk (6) bildenden Abschnitt aufweist.

5. Verbindungselement (1) nach einem der vorstehenden Ansprüche, **dadurch gekennzeichnet, dass** wenigstens eines seiner Eingriffsteile (2, 3) eine derartige Form aufweist, dass dann, wenn es ein Profil (10, 11) hält, dieses in der Lage ist, sich ihm gegenüber um eine Achse zu drehen, die zu der durch die beiden parallelen Enden (12, 13; 14, 15) definierten Ebene senkrecht verläuft.

6. Verbindungselement (1) nach einem der vorstehenden Ansprüche, **dadurch gekennzeichnet, dass** es ein Mittel (7) zur Feststellverbindung mit einem Verstrebungselement (20) umfasst.

7. Verbindungselement (1) nach Anspruch 6, **dadurch gekennzeichnet, dass** das Verstrebungselement (20) einen Gewindestift aufweist, dessen Außengewinde an wenigstens einem Winkelabschnitt (22) gefast ist, und das Verbindungsmittel (7) ein Innengewinde aufweist, das dem Außengewinde des Stiftes entspricht und an wenigstens einem Winkelabschnitt (8), der dem oder den nicht gefasten Winkelabschnitt(en) (21) des Außengewindes entspricht, ausgebohrt ist, so dass die beiden Elemente (20, 1) entlang der Achse des Stiftes relativ zueinander frei verschieblich sind, wenn der oder die gewindete(n) Winkelabschnitt(e) (21) des Stiftes und der oder die ausgebohrten Winkelabschnitt(e) (8) des Innengewindes sowie der oder die gefaste(n) Winkelabschnitt(e) (22) des Außengewindes und der oder die Innengewindewinkelabschnitt(e) (9) einander gegenüber gebracht werden.

8. Verkleidung einer vertikalen, horizontalen oder geneigten Wand, umfassend:
- Verstrebungselemente (20), die an der Wand oder, im Fall einer geneigten Wand, an den Sparren befestigt sind,
- eine Wärme- und/oder Schallisolierung, die auf die Verstrebungselemente (20) aufgeschoben oder zwischen ihnen eingefügt ist,
- Elemente zum Halten von Profilen (10, 11) zum Abstützen einer Verblendung, die an den Verstreburigselementen (20) im gewünschten Abstand von der Wand befestigt sind,
- Profilen (10, 11), von denen wenigstens einige an den Halteelementen befestigt sind, und
- eine an den Profilen (10, 11) anliegende Verblendung,
**dadurch gekennzeichnet, dass** sie ein Element zum Verbinden (1) von wenigstens zwei Profilen (10, 11) nach einem der vorstehenden Ansprüche umfasst.

9. Verkleidung nach Anspruch 8, **dadurch gekennzeichnet, dass** das Verbindungselement (1) einen ein Element zum Halten der Profile (10, 11) bildenden Teil aufweist.

10. Verfahren zum stumpfen Aneinanderfügen von zwei Profilen (10, 11) in einer einzigen Richtung, mit einem eventuellen Beabstanden um einen einstellbaren Abstand, mit Hilfe eines Verbindungselements (1) nach einem der Ansprüche 1 bis 7.

11. Verfahren zum Verbinden von zwei Profilen (10, 11) in koplanarer Position ihrer parallelen Enden (12, 13; 14, 15) mit Hilfe eines Verbindungselements (1) nach einem der Ansprüche 1 bis 7.

12. Verfahren zum Verbinden von zwei Profilen (10, 11) in nicht koplanarer Position ihrer parallelen Enden (12, 13; 14, 15) mit Hilfe eines Verbindungselements (1) nach einem der Ansprüche 1 bis 7.
